# EUROPEAN PATENT APPLICATION

(11) **EP 4 852 475 A1**
(43) Date of publication of application: **09.12.2026**
(21) Application number: 24921518.7
(22) Date of filing: 14.10.2024
(51) Int. Cl.: H04W 8/00, H04W 8/08, H04W 8/26

(54) **METHOD FOR TRANSMITTING INFORMATION, DEVICE, AND STORAGE MEDIUM**

(30) Priority: 30.01.2024 CN 202410136056
(71) Applicant: ZTE Corporation, Shenzhen, Guangdong 518057 (CN)
(72) Inventor: LI, Zhijun, Shenzhen, Guangdong 518057 (CN); ZHU, Jinguo, Shenzhen, Guangdong 518057 (CN); LIANG, Shuang, Shenzhen, Guangdong 518057 (CN)
(74) Representative: Aipex B.V.
(86) International application number: PCT/CN2024/124657
(87) International publication number: WO 2025/161494

(57) **Abstract**

Provided are a method for transmitting information, a device, and a storage medium. The method includes: receiving (S310) a Network Function (NF) discovery request message carrying a query parameter from a second mobile network, where the NF discovery request message is used for requesting discovery of a target NF; determining (S320), based on the query parameter, that the target NF is deployed in a third mobile network; and returning (S330) a first NF discovery response message to the second mobile network to enable the second mobile network to discover the target NF based on the first NF discovery response message.

## Description

### TECHNICAL FIELD

The present application relates to the field of communication technology, for example, a method for transmitting information, a device, and a storage medium.

### BACKGROUND

In a 5G network, Network Function (NF) discovery may be performed through a Network Repository Function (NRF). An NF parameter configuration (NF profile) of each specific NF is registered with the NRF, where the registration process may be performed through operations, administration, and maintenance (OAM) or each specific NF may proactively register with the NRF.

In the case where a user equipment (UE), also referred to as a user terminal or a terminal, roams to a visited public land mobile network (VPLMN), a series of NFs serving the UE need to be discovered based on a current roaming situation of the UE, where some NFs are typically deployed in a home public land mobile network (HPLMN), while some NFs have to be present in the VPLMN.

In a roaming scenario, an Access and Mobility Management Function (AMF) needs to be present in the visited network, while an Authentication Server Function (AUSF) and a Unified Data Management (UDM) function have to be deployed in the home network.

However, in some special service scenarios, some special NFs (such as the AUSF and the UDM) are deployed in neither the HPLMN nor the VPLMN but deployed in another partner network (partner PLMN). In this case, how to select an NF in the roaming scenario is an urgent problem to be solved.

### SUMMARY

In view of this, embodiments of the present application provide a method for transmitting information, a device, and a storage medium, thereby achieving NF selection in a roaming scenario.

An embodiment of the present application provides a method for transmitting information, which is applied to a first mobile network. The method includes: receiving an NF discovery request message carrying a query parameter from a second mobile network, where the NF discovery request message is used for requesting discovery of a target NF; determining, based on the query parameter, that the target NF is deployed in a third mobile network; and returning a first NF discovery response message to the second mobile network to enable the second mobile network to discover the target NF based on the first NF discovery response message.

An embodiment of the present application provides a method for transmitting information, which is applied to a second mobile network. The method includes: sending an NF discovery request message carrying a query parameter to a first mobile network to enable the first mobile network to determine, based on the query parameter, that a target NF is deployed in a third mobile network, where the NF discovery request message is used for requesting discovery of the target NF; receiving an NF discovery response message returned by the first mobile network; and discovering the target NF based on the NF discovery response message.

An embodiment of the present application provides a communication device. The communication device includes a memory and at least one processor.

The memory is configured to store at least one program.

When executed by the at least one processor, the at least one program causes the at least one processor to perform the method of any preceding embodiment.

An embodiment of the present application provides a storage medium storing a computer program which, when executed by a processor, causes the processor to perform the method of any preceding embodiment.

### BRIEF DESCRIPTION OF DRAWINGS

FIG. 1 is a diagram illustrating the system architecture of a 5G network according to the related art.
FIG. 2 is a flowchart of discovery of a target NF in a roaming scenario according to the related art.
FIG. 3 is a flowchart of a method for transmitting information according to an embodiment of the present application.
FIG. 4 is another flowchart of a method for transmitting information according to an embodiment of the present application.
FIG. 5 is a flowchart of discovery of a target NF in a roaming scenario according to an embodiment of the present application.
FIG. 6 is another flowchart of discovery of a target NF in a roaming scenario according to an embodiment of the present application.
FIG. 7 is a block diagram of an apparatus for transmitting information according to an embodiment of the present application.
FIG. 8 is another block diagram of an apparatus for transmitting information according to an embodiment of the present application.
FIG. 9 is a diagram illustrating the structure of a communication device according to an embodiment of the present application.

### DETAILED DESCRIPTION

Embodiments of the present application are described hereinafter in conjunction with the drawings. The present application is described below in conjunction with embodiments and the drawings. The embodiments described below are intended to explain the present application and not to limit the scope of the present application.

In some special service scenarios, for example, in one service scenario where an operator provides users with a large number of steered roaming data cards to enable access via a particular roaming network, an AUSF/UDM serving such cards is deployed in a partner PLMN; and in another service scenario where the operator provides a large number of Internet of Things (IoT) terminal cards for IoT devices to an IoT service provider, an AUSF and a UDM for these IoT terminal cards are deployed within a network provided by the IoT service provider. In such service scenarios, the related art fails to achieve NF selection in a roaming scenario; therefore, special requirements are imposed on NF selection in a roaming scenario.

In view of this, embodiments of the present application provide a solution for NF selection in a roaming scenario of a UE to achieve NF selection for the UE in a particular partner network.

It is to be noted that in the embodiments of the present application, using an example in which a visited network may be referred to as a VPLMN, a home network may be referred to as an HPLMN, and a partner network may be referred to as a partner PLMN, a process in which a visited network NF performs discovery of a target NF through a home network NF in a roaming scenario is described.

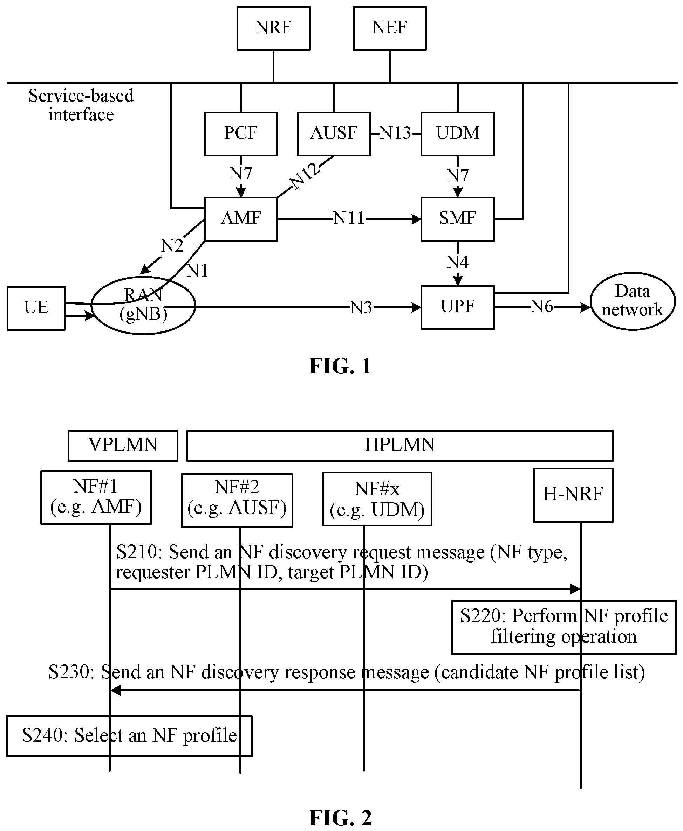

FIG. 1 is a diagram illustrating the system architecture of a 5G network according to the related art. As shown in FIG. 1, a system of the 5G network in the related art includes the following NFs: a UE, a Radio Access Network (RAN), an NRF, an AMF, a Session Management Function (SMF), a User Plane Function (UPF), an AUSF, a UDM, a Policy Control Function (PCF), and a Network Exposure Function (NEF).

RAN: In the 5G network, the RAN may be a New Radio (NR) base station.

NRF: The NRF allows any NF in the network to register an NF profile with the NRF and provides a discovery service for any NF to search for another NF in the network.

The AMF includes the following functions: registration management, connection management, reachability management, and mobility management. The AMF further performs access authentication and access authorization. The AMF is a Network Attached Storage (NAS) security terminal and relays Session Management Network Attached Storage (SM NAS) and the like between the UE and the SMF.

The SMF includes the following functions: session establishment, modification, and release, UE IP address allocation and management (including an optional authorization function), selection and control of a UP function, and downlink data notification. The SMF is associated with and controls the UPF through N4.

The UPF includes the following functions: serving as anchor points for intra/inter-Radio Access Technology (RAT) mobility, packet routing and forwarding, traffic usage reporting, Quality of Service (QoS) processing of a user plane, downlink packet buffering, triggering of downlink data notification, and the like.

AUSF: The AUSF provides an authentication function for the UE.

UDM: The UDM provides various subscription data of the UE, for example, to the AMF for access and mobility management, the SMF for PDU session management, and the like. The UDM further processes AMF registration from the AMF to record a serving AMF of the UE, SMF registration from the SMF to record PDU session information, and the like.

PCF: The PCF provides QoS policy rules to a Control Plane Function to implement these rules. The PCF converts Application Function (AF) requests into policies applied to PDU sessions. The PCF provides AF-affected service guidance enforcement to the SMF in Policy and Charging Control (PCC) rules so that the SMF can establish a data path to offload services to a local data network.

NEF: The NEF collects network events or network statistics related to the UE and provides such information to an Application Function/Application Server (AF/AS), that is, exposes network information to the outside.

FIG. 2 is a flowchart of discovery of a target NF in a roaming scenario according to the related art. As shown in FIG. 2, the process in which a visited network NF performs discovery of a home network NF through a home network NRF in the roaming scenario includes the steps below.

In S210, NF#1 sends an NF discovery request message.

NF#1 (for example, an AMF) in the VPLMN sends the NF discovery request message to the NRF in the HPLMN (for example, an H-NRF), where the NF discovery request message carries a query parameter for the NRF to discover a candidate NF.

For example, the query parameter may indicate an NF type (for example, AUSF/UDM) of the target NF, an NF state of the target NF, and the like.

In the roaming scenario, NF#1 also needs to indicate a requester network identifier (for example, a VPLMN ID) and a target network identifier of the target NF to be discovered (for example, an HPLMN ID). In the case where a requester NF (that is, NF#1) is in the VPLMN, the requester network identifier is configured to be the VPLMN ID. In the case where the request is used for discovering the NF (for example, the AUSF/UDM) in the HPLMN, the target network identifier is configured to be the HPLMN ID.

In S220, the H-NRF performs an NF profile filtering operation.

The H-NRF in the home network executes internal logic to filter the candidate NF by using the input query parameter. In this process, the H-NRF discovers the target NF (for example, the AUSF/UDM) by filtering based on the target network identifier.

In S230, the H-NRF sends an NF discovery response to NF#1.

The H-NRF sends an NF discovery response message to NF#1, where the NF discovery response message includes an NF profile list of candidate NFs. For example, if NF#2 and NF#x are discovered, the returned NF profile list includes NF profiles of NF#2 and NF#x.

In S240, an NF profile is selected.

In the case where the NF profile list of candidate NFs is received, NF#1 may select one NF from the returned NF profile list for future use and buffer the result in a local memory.

However, in the special service scenarios in the related art, the AUSF and the UDM are present in neither the home network HPLMN nor the visited network VPLMN but present in another partner network (partner PLMN), where the partner network cooperates with an operator of the home network. In this roaming scenario, the process shown in FIG. 2 fails to achieve NF discovery. In view of this, the embodiments of the present application provide a method for transmitting information to achieve the NF selection for the UE in the particular partner network in the roaming scenario.

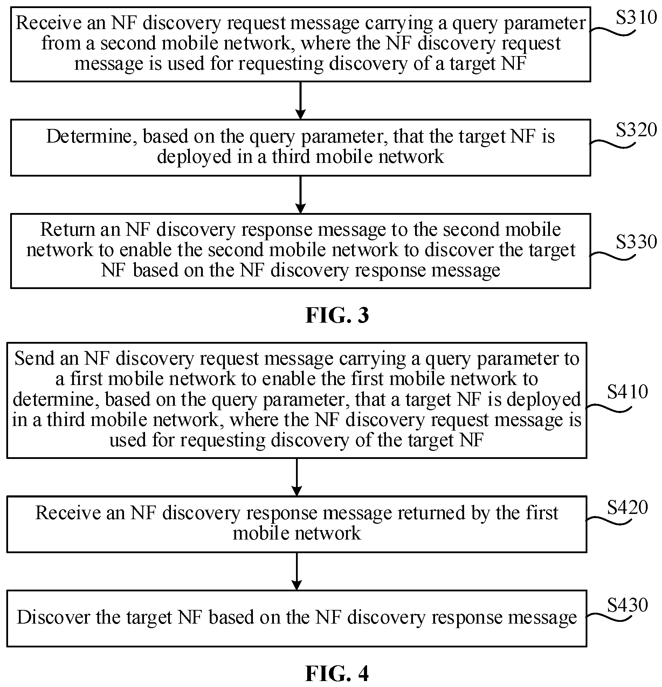

In an embodiment, FIG. 3 is a flowchart of a method for transmitting information according to an embodiment of the present application. This embodiment is applied to NF selection in a terminal roaming scenario. This embodiment may be implemented by a first mobile network. For example, the first mobile network may be an NF in a home network (that is, an HPLMN) corresponding to a UE; a second mobile network may be an NF in a visited network (that is, a VPLMN) corresponding to the UE; and a third mobile network may be an NF in a partner PLMN corresponding to the UE. The third mobile network has a cooperative relationship with the second mobile network.

As shown in FIG. 3, this embodiment includes S310 to S330.

In S310, an NF discovery request message carrying a query parameter is received from the second mobile network, where the NF discovery request message is used for requesting discovery of a target NF.

In S320, it is determined based on the query parameter that the target NF is deployed in the third mobile network.

In S330, an NF discovery response message is returned to the second mobile network to enable the second mobile network to discover the target NF based on the NF discovery response message.

In this embodiment, the first mobile network receives the NF discovery request message from the second mobile network, where the NF discovery request message carries the query parameter for requesting the discovery of the target NF. Then, the first mobile network determines, based on the query parameter, whether the target NF is deployed in the third mobile network; and if the target NF is deployed in the third mobile network, the first mobile network returns the NF discovery response message to the second mobile network so that the second mobile network can discover the target NF based on the NF discovery response message. Thus, in the roaming scenario, even if the target NF is not deployed in the home network or the visited network, the target NF in the partner network can be queried through the home network and the visited network.

In an embodiment, the NF discovery response message includes one of redirection information of the third mobile network or target NF information of the third mobile network. In an example, the redirection information of the third mobile network may be understood as redirection information of a network that has a cooperative relationship with the second mobile network; and the redirection information of the third mobile network is used for indicating related information of the third mobile network. The target NF information of the third mobile network is used for indicating the target NF deployed in the third mobile network.

In an embodiment, the query parameter includes at least one of an NF type, a requester network identifier, a target network identifier, or a routing identifier. The NF type is used for indicating an NF type corresponding to the target NF. For example, the NF type may include, but is not limited to, one of an AUSF or a UDM. The requester network identifier is used for indicating an identifier corresponding to a network where the UE is currently roaming or may be understood as an identifier corresponding to a network that initiates an NF discovery request. The target network identifier refers to an identifier corresponding to a network where the target NF to be discovered is deployed. The routing identifier is used for indicating a discovery path of the target NF. For example, assuming that the target NF may be the AUSF or the UDM, the routing identifier is used for indicating a discovery path of the AUSF or the UDM.

In an embodiment, that it is determined based on the query parameter that the target NF is deployed in the third mobile network includes one of: determining, based on the requester network identifier and the target network identifier, that the target NF is deployed in the third mobile network; or determining, based on the requester network identifier, the target network identifier, and the routing identifier, that the target NF is deployed in the third mobile network.

In an example, based on the identifier of the network where the UE is currently roaming (corresponding to the requester network identifier), the first mobile network may discover a discovery request for discovering a certain NF type in the home network (corresponding to the target network identifier) and forward the discovery request to an NRF in the third mobile network. In an example, based on the identifier of the network where the UE is currently roaming (corresponding to the requester network identifier) and the routing identifier, the first mobile network may discover a discovery request for discovering a certain NF type in the home network (corresponding to the target network identifier) and forward the discovery request to the NRF in the third mobile network. That is, if the UE is currently roaming in a certain visited network and has a particular routing identifier, an NF of a particular NF type is allocated to the UE in the third mobile network.

In an embodiment, the redirection information of the third mobile network includes at least one of a network identifier of the third mobile network, a fully qualified domain name (FQDN) of an NRF corresponding to the third mobile network, an identifier of an NRF corresponding to the third mobile network, or an application programming interface (API) root Uniform Resource Identifier (URI) of an NRF corresponding to the third mobile network.

In an embodiment, in response to the NF discovery response message including the target NF information of the third mobile network, the method further includes: sending the NF discovery request message to the third mobile network; and receiving an NF discovery response message from the third mobile network, where the NF discovery response message from the third mobile network includes the target NF information of the third mobile network.

In an example, in the case where the first mobile network acquires the target NF to be queried from the NRF (P-NRF) in the third mobile network, the first mobile network needs to forward the NF discovery request message sent by the second mobile network to the third mobile network, where the query parameter carried in the NF discovery request message remains unchanged. After receiving the NF discovery request message forwarded by the first mobile network, the P-NRF in the third mobile network queries the target NF satisfying conditions and returns the NF discovery response message to the first mobile network, where the NF discovery response message carries a candidate NF profile list of the third mobile network, and each item in the candidate NF profile list includes an NF profile of one target NF.

In an embodiment, FIG. 4 is another flowchart of a method for transmitting information according to an embodiment of the present application. This embodiment is applied to NF selection in a terminal roaming scenario. This embodiment may be implemented by a second mobile network. As shown in FIG. 4, this embodiment includes S410 to S430.

In S410, an NF discovery request message carrying a query parameter is sent to a first mobile network to enable the first mobile network to determine, based on the query parameter, that a target NF is deployed in a third mobile network, where the NF discovery request message is used for requesting discovery of the target NF.

In S420, an NF discovery response message returned by the first mobile network is received.

In S430, the target NF is discovered based on the NF discovery response message.

In this embodiment, the second mobile network sends the NF discovery request message carrying the query parameter to the first mobile network to enable the first mobile network to determine, based on the query parameter, whether the target NF is deployed in the third mobile network. If the target NF is deployed in the third mobile network, the first mobile network returns the NF discovery response message to the second mobile network so that the second mobile network can discover the target NF in the third mobile network based on the NF discovery response message. Thus, in the roaming scenario, even if the target NF is not deployed in a home network or a visited network, the target NF in a partner network can be queried through the home network and the visited network.

In an embodiment, the NF discovery response message includes one of redirection information of the third mobile network or target NF information of the third mobile network.

In an embodiment, the query parameter includes at least one of an NF type, a requester network identifier, a target network identifier, or a routing identifier.

In an embodiment, the redirection information of the third mobile network includes at least one of a network identifier of the third mobile network, an FQDN of an NRF corresponding to the third mobile network, an identifier of an NRF corresponding to the third mobile network, or an API root URI of an NRF corresponding to the third mobile network.

In an embodiment, in response to the NF discovery response message including the redirection information of the third mobile network, the method further includes: sending the NF discovery request message to the third mobile network.

In an embodiment, sending the NF discovery request message to the third mobile network includes: constructing an API service address of the third mobile network based on the redirection information of the third mobile network; and initiating a discovery request for the target NF to the third mobile network by using the API service address.

For example, the third mobile network may be the partner network (partner PLMN) and correspondingly, the redirection information of the third mobile network may be a partner PLMN redirection. In an example, in the case where the redirection information of the third mobile network includes the network identifier of the third mobile network, the second mobile network may acquire third mobile network NRF information (P-NRF information) from the third mobile network, construct the API service address of the third mobile network based on the P-NRF information, and initiate the discovery request for the target NF to the third mobile network. In an example, in the case where the redirection information of the third mobile network includes the FQDN of the third mobile network NRF, the second mobile network needs to obtain an address of the third mobile network NRF (P-NRF) from a Domain Name System (DNS) server of the third mobile network, construct the API service address of the third mobile network NRF based on the address of the third mobile network NRF, and initiate the discovery request for the target NF to the third mobile network NRF. In an example, in the case where the redirection information of the third mobile network includes the identifier of the third mobile network NRF, for example, an NF instance ID, the second mobile network needs to obtain the third mobile network NRF (P-NRF) information through a local indication or a query from a second mobile network NRF, construct the API service address of the third mobile network NRF based on the P-NRF information, and initiate the discovery request for the target NF to the third mobile network NRF. In an example, in the case where the redirection information of the third mobile network includes the API root URI of the third mobile network NRF, the second mobile network needs to construct the API service address of the third mobile network NRF based on the API root URI of the third mobile network NRF and initiate the discovery request for the target NF to the third mobile network NRF.

It is to be noted that for explanations of parameters such as the redirection information of the third mobile network, the target NF information of the third mobile network, and the query parameter applied to the second mobile network, reference may be made to the preceding description of the corresponding parameters applied to the first mobile network, and the details are not repeated here.

In the following embodiments, a discovery process of a target NF is described using an example in which a first mobile network is an NRF in a home network HPLMN (H-NRF), a second mobile network is a requester NF (for example, an AMF) in a visited network VPLMN, and a third mobile network is a P-NRF in a partner network (partner PLMN).

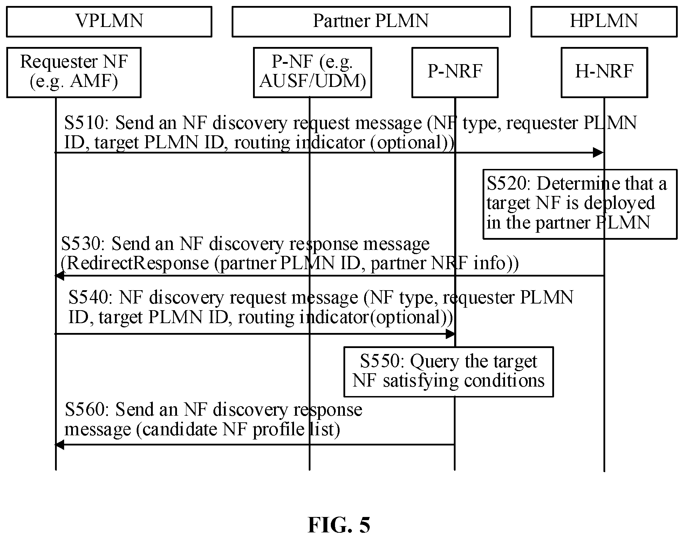

In an embodiment, FIG. 5 is a flowchart of discovery of a target NF in a roaming scenario according to an embodiment of the present application. This embodiment describes that in the roaming scenario, the visited network NF is forwarded by the home network NRF (H-NRF) to the partner network (partner PLMN) NRF (P-NRF) to perform NF discovery. As shown in FIG. 5, the steps below are included.

In S510, the requester NF sends an NF discovery request message.

The requester NF in the visited network sends the NF discovery request message to the home network NRF (H-NRF), where the NF discovery request message carries several query parameters.

In this step, the requester NF may be the AMF in the VPLMN or an NRF in the VPLMN (V-NRF). The AMF in the VPLMN may initiate an NF discovery request to the home network H-NRF via the V-NRF or directly initiate the NF discovery request to the home network H-NRF.

In this step, the query parameters may include a combination of the following parameters.

(a) NF type. If the requester NF desires to discover a certain type of NF, the query parameters need to carry the NF type to indicate an NF type of the target NF to be discovered. For example, the NF type may include, but is not limited to, at least one of an ASUF, a UDM, an SMF, or a UPF.

(b) Requester network identifier (denoted as requester PLMN ID). In the case of UE roaming, the query parameters typically need to carry the requester PLMN ID. In this case, the requester PLMN ID may be configured to be a VPLMN ID to indicate that a UE is currently in a roaming network VPLMN.

(c) Target network identifier (denoted as target PLMN ID). In the case of UE roaming, the query parameters typically need to carry the target PLMN ID. In this case, the target PLMN ID may be configured to be an HPLMN ID to indicate that the target NF to be discovered is deployed in the home network HPLMN.

(d) Routing indicator. If the requester NF is the AMF and the target NF to be discovered may be the AUSF or the UDM, the query parameters typically may also carry the routing indicator. The routing indicator carried in this step may be acquired by the AMF from a Subscription Concealed Identifier (SUCI) provided by the UE during registration. In the case where multiple AUSFs and multiple UDMs are deployed in the network, as planned by an operator, the routing indicator may indicate one of the multiple AUSFs and the multiple UDMs.

In S520, the H-NRF determines that the target NF is deployed in the partner PLMN.

After receiving the NF discovery request from the requester NF, the H-NRF determines that the target NF in the partner network (partner PLMN) needs to be discovered.

In this embodiment, based on an operator policy on the H-NRF and the combination of the NF type, the requester network identifier (requester PLMN ID), the target network identifier (target PLMN ID), and a routing identifier (routing indicator) in the NF discovery request, the H-NRF determines that the target NF needs to be discovered in the partner network (partner PLMN).

In a specific implementation, the operator may configure a local policy in the H-NRF and based on the VPLMN ID (corresponding to the requester PLMN ID) of the network where the UE is currently roaming, forward a request for discovering a certain type of NF (corresponding to the NF type) in the home network HPLMN (corresponding to the target PLMN ID) to the NRF in the partner network (partner PLMN). That is, if the UE is currently roaming in a certain visited network VPLMN, a particular type of NF (for example, the AUSF or the UDM) in the partner network (partner PLMN) is allocated to the UE.

In another specific implementation, the operator may configure a local policy in the H-NRF and based on the VPLMN ID (corresponding to the requester PLMN ID) of the network where the UE is currently roaming and the routing identifier (routing indicator), forward a request for discovering a certain type of NF (corresponding to the NF type) in the home network HPLMN (corresponding to the target PLMN ID) to the NRF in the partner network (partner PLMN). That is, if the UE is currently roaming in a certain visited network VPLMN and has a particular routing identifier (routing indicator), a particular type of NF (for example, the AUSF or the UDM) in the partner network (partner PLMN) is allocated to the UE.

In S530, the H-NRF sends an NF discovery response message.

The H-NRF returns the NF discovery response message to the requester NF, where the NF discovery response message carries redirection (RedirectResponse) information for carrying partner network redirection information (partner PLMN redirection).

The partner network redirection information (partner PLMN redirection) may include a combination of a partner network identifier (also referred to as a partner PLMN ID), an FQDN of a partner network NRF (denoted as a partner NRF FQDN), an ID of the partner network NRF (denoted as a partner NRF ID), and an API root URI of the partner network NRF (denoted as a partner NRF API Root URI).

If the partner network redirection information (partner PLMN redirection) only includes the partner PLMN ID, the requester NF needs to obtain NRF (P-NRF) information from the partner network (partner PLMN), construct an API service address of the P-NRF based on the P-NRF information, and initiate the NF discovery request to the P-NRF.

If the partner network redirection information (partner PLMN redirection) only includes the FQDN of the partner network NRF, the requester NF needs to obtain an address of the partner network NRF (P-NRF) from a DNS server of the partner network, construct the API service address of the P-NRF based on the address of the P-NRF, and initiate the NF discovery request to the P-NRF.

If the partner network redirection information (partner PLMN redirection) only includes the ID of the partner network NRF (for example, an NF instance ID), the requester NF needs to obtain the partner network NRF (P-NRF) information from a local indication or a query from the visited network NRF, construct the API service address of the P-NRF based on the P-NRF information, and initiate the NF discovery request to the P-NRF.

If the partner network redirection information (partner PLMN redirection) includes the API root URI of the partner network NRF, the requester NF constructs the API service address of the P-NRF based on the API root URI of the partner network NRF and initiates the NF discovery request to the P-NRF.

In S540, the requester NF sends the NF discovery request message to the P-NRF.

In this embodiment, the requester NF sends the NF discovery request message to the partner network NRF (P-NRF).

In this step, for the query parameters carried by the requester NF in the NF discovery request message, reference may be made to the query parameters in S510.

In S550, the P-NRF queries the target NF satisfying conditions.

After receiving the NF discovery request message from the requester NF, the P-NRF queries the target NF (for example, the AUSF/UDM) satisfying the conditions.

In S560, the P-NRF sends an NF discovery response message to the requester NF.

The P-NRF returns the NF discovery response message to the requester NF, where the NF discovery response message carries a candidate NF profile list, and each item in the candidate NF profile list includes an NF profile of one target NF.

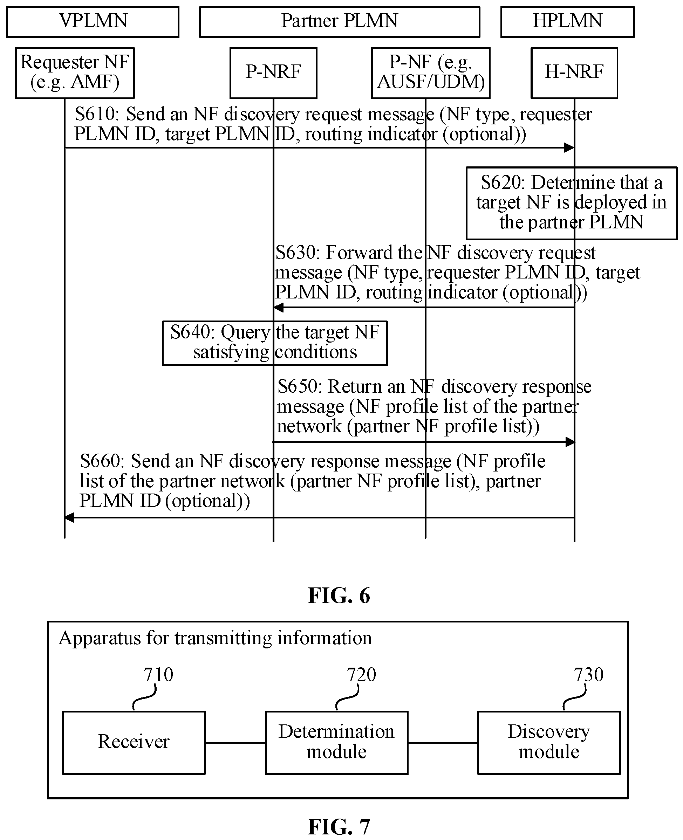

In an embodiment, FIG. 6 is another flowchart of discovery of a target NF in a roaming scenario according to an embodiment of the present application. This embodiment describes that in the roaming scenario, the home network NRF (H-NRF) obtains the NF to be queried from the P-NRF in the partner network (partner PLMN) and returns the NF to the visited network NF. As shown in FIG. 6, the steps below are included.

In S610, the requester NF sends an NF discovery request message.

The requester NF in the visited network sends the NF discovery request message to the home network NRF (H-NRF).

In this step, for query parameters carried by the requester NF, reference may be made to S510 in the preceding embodiment, and the details are not repeated here.

In S620, the H-NRF determines that the target NF is deployed in the partner PLMN.

After receiving an NF discovery request from the requester NF, the H-NRF determines that the target NF in the partner network (partner PLMN) needs to be discovered.

In this step, for a determination process in which the H-NRF determines that the target NF in the partner network needs to be discovered, reference may be made to S520 in the preceding embodiment, and the details are not repeated here.

In S630, the H-NRF forwards the NF discovery request message to the P-NRF.

The H-NRF forwards the NF discovery request message sent by the requester NF to the partner network NRF (P-NRF), where the query parameters carried therein remain unchanged.

In S640, the P-NRF queries the target NF satisfying conditions.

After receiving the NF discovery request message forwarded by the N-NRF, the P-NRF queries the target NF (for example, the AUSF/UDM) satisfying the conditions.

In S650, the P-NRF returns an NF discovery response message to the H-NRF.

The P-NRF returns the NF discovery response message to the H-NRF, where the NF discovery response message carries a candidate NF profile list of the partner network (partner NF profile list), and each item in the list includes an NF profile of one target NF.

In S660, the H-NRF returns an NF discovery response message to the requester NF.

The H-NRF returns the NF discovery response message to the requester NF, where the NF discovery response message carries the candidate NF profile list (partner NF profile list) returned by the P-NRF and optionally carries a PLMN ID of the partner network (partner PLMN ID).

In an embodiment, FIGS. 5 and 6 describe the processes of discovering a particular NF in the partner network in the roaming scenario, which are mainly applied to a Mobile Original (MO) service procedure. However, the processes described in FIGS. 5 and 6 are also applicable to a Mobile Terminated (MT) service procedure.

In a typical embodiment, if a third-party application server (AS) desires to obtain state information (for example, a roaming state) of the UE from a network, the AS may subscribe to the state information of the UE from an NEF, and the NEF needs to subscribe to the state information of the UE from a UDM. The NEF may obtain the UDM currently serving the UE in the partner network by using the process in FIG. 5 or 6. Specifically, in the processes shown in FIGS. 5 and 6, the NEF is the requester NF and deployed in the home network, and the UDM in the partner network is a P-NF.

In an embodiment, FIG. 7 is a block diagram of an apparatus for transmitting information according to an embodiment of the present application. This embodiment is applied to a first mobile network. As shown in FIG. 7, the apparatus for transmitting information in this embodiment includes a receiver 710, a determination module 720, and a discovery module 730.

The receiver 710 is configured to receive an NF discovery request message carrying a query parameter from a second mobile network, where the NF discovery request message is used for requesting discovery of a target NF.

The determination module 720 is configured to determine, based on the query parameter, that the target NF is deployed in a third mobile network.

The discovery module 730 is configured to return an NF discovery response message to the second mobile network to enable the second mobile network to discover the target NF based on the NF discovery response message.

In an embodiment, the NF discovery response message includes one of redirection information of the third mobile network or target NF information of the third mobile network.

In an embodiment, the query parameter includes at least one of an NF type, a requester network identifier, a target network identifier, or a routing identifier.

In an embodiment, the determination module 720 is configured to perform at least one of: determining, based on the requester network identifier and the target network identifier, that the target NF is deployed in the third mobile network; or determining, based on the requester network identifier, the target network identifier, and the routing identifier, that the target NF is deployed in the third mobile network.

In an embodiment, the redirection information of the third mobile network includes at least one of a network identifier of the third mobile network, an FQDN of an NRF corresponding to the third mobile network, an identifier of an NRF corresponding to the third mobile network, or an API root URI of an NRF corresponding to the third mobile network.

In an embodiment, in response to the NF discovery response message including the target NF information of the third mobile network, the apparatus for transmitting information, which is applied to the first mobile network, further includes a transmitter.

The transmitter is configured to send the NF discovery request message to the third mobile network.

The receiver is further configured to receive an NF discovery response message from the third mobile network, where the NF discovery response message includes the target NF information of the third mobile network.

The apparatus for transmitting information of this embodiment is configured to perform the method for transmitting information, which is applied to the first mobile network and provided in the embodiment shown in FIG. 3. The implementation principles and technical effects of the apparatus for transmitting information of this embodiment are similar to those of the method for transmitting information and thus are not described again here.

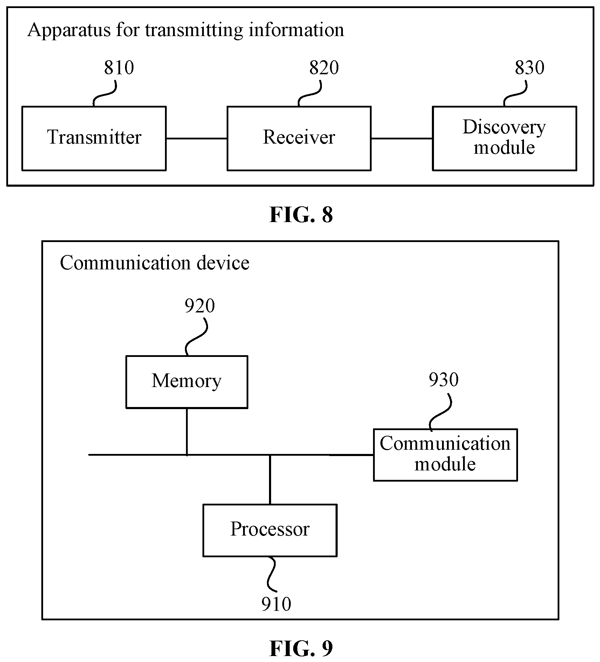

In an embodiment, FIG. 8 is another block diagram of an apparatus for transmitting information according to an embodiment of the present application. This embodiment is applied to a second mobile network. As shown in FIG. 8, the apparatus for transmitting information in this embodiment includes a transmitter 810, a receiver 820, and a discovery module 830.

The transmitter 810 is configured to send an NF discovery request message carrying a query parameter to a first mobile network to enable the first mobile network to determine, based on the query parameter, that a target NF is deployed in a third mobile network, where the NF discovery request message is used for requesting discovery of the target NF.

The receiver 820 is configured to receive an NF discovery response message returned by the first mobile network.

The discovery module 830 is configured to discover the target NF based on the NF discovery response message.

In an embodiment, the NF discovery response message includes one of redirection information of the third mobile network or target NF information of the third mobile network.

In an embodiment, the query parameter includes at least one of an NF type, a requester network identifier, a target network identifier, or a routing identifier.

In an embodiment, the redirection information of the third mobile network includes at least one of a network identifier of the third mobile network, an FQDN of an NRF corresponding to the third mobile network, an identifier of an NRF corresponding to the third mobile network, or an API root URI of an NRF corresponding to the third mobile network.

In an embodiment, in response to the NF discovery response message including the redirection information of the third mobile network, the apparatus for transmitting information, which is applied to the second mobile network, further includes the transmitter.

The transmitter is further configured to send the NF discovery request message to the third mobile network.

In an embodiment, sending the NF discovery request message to the third mobile network includes: constructing an API service address of the third mobile network based on the redirection information of the third mobile network; and initiating a discovery request for the target NF to the third mobile network by using the API service address.

The apparatus for transmitting information of this embodiment is configured to perform the method for transmitting information, which is applied to the second mobile network and provided in the embodiment shown in FIG. 4. The implementation principles and technical effects of the apparatus for transmitting information of this embodiment are similar to those of the method for transmitting information and thus are not described again here.

In an embodiment, FIG. 9 is a diagram illustrating the structure of a communication device according to an embodiment of the present application. As shown in FIG. 9, the device of the present application includes a processor 910, a memory 920, and a communication module 930. At least one processor 910 may be provided in the device, where one processor 910 is shown as an example in FIG. 9. At least one memory 920 may be provided in the device, where one memory 920 is shown as an example in FIG. 9. The processor 910, the memory 920, and the communication module 930 in the device may be connected via a bus or in other manners. The connection via a bus is shown as an example in FIG. 9. In this embodiment, the device may be a first mobile network or a second mobile network.

As a computer-readable storage medium, the memory 920 may be configured to store software programs, computer-executable programs, and modules, such as program instructions/modules corresponding to the device of any embodiment of the present application (for example, the receiver 710, the determination module 720, and the discovery module 730 in the apparatus for transmitting information). The memory 920 may include a program storage region and a data storage region. The program storage region may store an operating system and an application program required by at least one function. The data storage region may store data created depending on the use of the device. Additionally, the memory 920 may include a highspeed random-access memory and may also include a nonvolatile memory, such as at least one magnetic disk memory, a flash memory, or another nonvolatile solid-state memory. In some examples, the memory 920 may be remote from the processor 910 and connectable to the device via a network. Examples of the network include, but are not limited to, the Internet, an intranet, a local area network, a mobile communication network, and a combination thereof. The communication module 930 is configured to implement communication interaction between the first mobile network, the second mobile network, and a third mobile network.

In the case where the communication device is the first mobile network, the device may be configured to perform the method for transmitting information, which is applied to the first mobile network and provided in any preceding embodiment, and the device has corresponding functions and effects.

In the case where the communication device is the second mobile network, the device may be configured to perform the method for transmitting information, which is applied to the second mobile network and provided in any preceding embodiment, and the device has corresponding functions and effects.

An embodiment of the present application provides a storage medium including computer-executable instructions which, when executed by a computer processor, cause the computer processor to perform a method for transmitting information, which is applied to a first mobile network. The method includes: receiving an NF discovery request message carrying a query parameter from a second mobile network, where the NF discovery request message is used for requesting discovery of a target NF; determining, based on the query parameter, that the target NF is deployed in a third mobile network; and returning an NF discovery response message to the second mobile network to enable the second mobile network to discover the target NF based on the NF discovery response message.

An embodiment of the present application provides a storage medium including computer-executable instructions which, when executed by a computer processor, cause the computer processor to perform a method for transmitting information, which is applied to a second mobile network. The method includes: sending an NF discovery request message carrying a query parameter to a first mobile network to enable the first mobile network to determine, based on the query parameter, that a target NF is deployed in a third mobile network, where the NF discovery request message is used for requesting discovery of the target NF; receiving an NF discovery response message returned by the first mobile network; and discovering the target NF based on the NF discovery response message.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A method for transmitting information, which is applied to a first mobile network, comprising:
receiving a Network Function, NF, discovery request message carrying a query parameter from a second mobile network, wherein the NF discovery request message is used for requesting discovery of a target NF;
determining, based on the query parameter, that the target NF is deployed in a third mobile network; and
returning a first NF discovery response message to the second mobile network to enable the second mobile network to discover the target NF based on the first NF discovery response message.

2. The method of claim 1, wherein the first NF discovery response message comprises one of redirection information of the third mobile network or target NF information of the third mobile network.

3. The method of claim 1, wherein the query parameter comprises at least one of an NF type, a requester network identifier, a target network identifier, or a routing identifier.

4. The method of claim 3, wherein determining, based on the query parameter, that the target NF is deployed in the third mobile network comprises one of:
determining, based on the requester network identifier and the target network identifier, that the target NF is deployed in the third mobile network; or
determining, based on the requester network identifier, the target network identifier, and the routing identifier, that the target NF is deployed in the third mobile network.

5. The method of claim 2, wherein the redirection information of the third mobile network comprises at least one of a network identifier of the third mobile network, a fully qualified domain name of a Network Repository Function, NRF, corresponding to the third mobile network, an identifier of an NRF corresponding to the third mobile network, or an application programming interface, API, root Uniform Resource Identifier of an NRF corresponding to the third mobile network.

6. The method of claim 2, in response to the first NF discovery response message comprising the target NF information of the third mobile network, further comprising:
sending the NF discovery request message to the third mobile network; and
receiving a second NF discovery response message from the third mobile network, wherein the second NF discovery response message comprises the target NF information of the third mobile network.

7. A method for transmitting information, which is applied to a second mobile network, comprising:
sending a Network Function, NF, discovery request message carrying a query parameter to a first mobile network to enable the first mobile network to determine, based on the query parameter, that a target NF is deployed in a third mobile network, wherein the NF discovery request message is used for requesting discovery of the target NF;
receiving an NF discovery response message returned by the first mobile network; and
discovering the target NF based on the NF discovery response message.

8. The method of claim 7, wherein the NF discovery response message comprises one of redirection information of the third mobile network or target NF information of the third mobile network.

9. The method of claim 7, wherein the query parameter comprises at least one of an NF type, a requester network identifier, a target network identifier, or a routing identifier.

10. The method of claim 7, wherein the redirection information of the third mobile network comprises at least one of a network identifier of the third mobile network, a fully qualified domain name of a Network Repository Function, NRF, corresponding to the third mobile network, an identifier of an NRF corresponding to the third mobile network, or an application programming interface, API, root Uniform Resource Identifier of an NRF corresponding to the third mobile network.

11. The method of claim 8, in response to the NF discovery response message comprising the redirection information of the third mobile network, further comprising:
sending the NF discovery request message to the third mobile network.

12. The method of claim 11, wherein sending the NF discovery request message to the third mobile network comprises:
constructing an API service address of the third mobile network based on the redirection information of the third mobile network; and
initiating a discovery request for the target NF to the third mobile network by using the API service address.

13. A communication device, comprising a memory and at least one processor; wherein
the memory is configured to store at least one program; and
the at least one program, when executed by the at least one processor, causes the at least one processor to perform the method of any one of claims 1 to 6 or 7 to 12.

14. A storage medium storing a computer program which, when executed by a processor, causes the processor to perform the method of any one of claims 1 to 6 or 7 to 12.
